# EUROPEAN PATENT APPLICATION

(11) **EP 1 202 191 A2**
(43) Date of publication of application: **02.05.2002**
(21) Application number: 01308237.5
(22) Date of filing: 27.09.2001
(51) Int. Cl.: G06F 17/30

(54) **Data management method and storage medium storing data management program**

(30) Priority: 31.10.2000 JP 2000332993
(71) Applicant: Kabushiki Kaisha Toshiba, Tokyo 105-8001 (JP)
(72) Inventor: Fujihara, Mutsumi, Kohoku-ku, Yokohama-shi, Kanagawa-ken (JP); Saito, Etsuo, Yokohama-shi, Kanagawa-ken (JP)
(74) Representative: Midgley, Jonathan Lee

(57) **Abstract**

Is possible to flexibly and dynamically handle several data types with efficient retrieval and updating. Different indices are assigned to several storage regions that are discriminated from each other by their addresses. Entries corresponding to records containing address values to the storage regions are formed so that the entries and the address values contained have one-to-one correspondence. The entries are registered in the indices assigned to the storage regions that are designated by the address values corresponding to the entries.

## Description

### BACKGROUND OF THE INVENTION

The present invention relates to a data management method and a storage medium storing a data management program. Particularly, this invention relates to a data management method suitable for managing data on several types of application systems that are stored in a main memory of a computer or that run on a computer.

In addition to communications, databases are one of core components of application systems running on a computer and also one of important factors for the performance and extendability of computer. Databases usually mean RDBs (Relational Databases), OODBs (Object oriented Databases) are sometimes used as databases though.

Known DBMS (Database Management System) such as RDB uses a data management framework called a schema. The schema-based management predefines a framework (schema) for organizing data and performs registration, updating, deletion and retrieval to data based on the set of data units called data items (attributes) that constitute a schema. A framework in which data are registered and a data record to be registered in RDB are called "table" and "tuple", respectively.

A schema defines one structure of plurality of tuples to be registered in one table. Users perform data storing with registration of tuples with a structure defined by a schema in several tables for which the schema has been defined by supervisory users. Users also perform data processing (updating) with changing the contents of tuples within a range defined by the schema.

This system, however, cannot efficiently perform data storing and processing as discussed below, and thus almost of no use due to extreme decrease in efficiency, except that registration of many tuples (records) of the same type in each of small number of tables (files) is only required.

Databases must handle data of variable length in nature as fixed-length data. This causes increase in data storage regions, procedures and so on. For example, it is not rare that a person owns several cars. Records of enormous personal information having an uncertain number of same data such as mentioned above are usually handled by known databases as follows:
(1) Use a schema defining the same number of data items as the maximum value that is assumed for an uncertain number.
(2) Use a schema defining one data item, while handling data having a plurality of values for the one data item, a plurality of the same tuples except the value of the data item being registered.

The method (1) could cause decrease in efficiency due to registration of tuples containing null data. The method (2) could also cause decrease in efficiency due to repeated registration of the same tuples except for one data item.

Prevention of such decrease in efficiency requires a special means to efficiently compress null values and/or duplicates.

Decrease in efficiency according to the method (2) will be significant for one data (personal information) containing several types of data items, such as, cars and agreement for insurance.

This problem could be solved by providing another table for an uncertain (variable) number of data items with unique identifier data common to tuples in that extra table and original tuples for providing the correspondence between the variable number of data and the original data record including them.

This method could, however, cause inevitable introduction of undesired identifier data items that have not been existed for the original data.

These problems further causes dispersion of plurality of data that should be handled as one group of data over several tables with increase in cost for retrieval using identifiers as keys to reciprocal access.

Not only decrease in efficiency, for example, the method (1) further have a problem in that a schema must be changed for database restructuring when handling data including same type of data the number of which exceeds an assumed maximum value.

In addition, the conventional databases which use a schema require database restructuring while halting services to application systems in extension and modification to the application systems with schema modification, thus having difficulty in occasional extension of the application systems that must continuously run.

As discussed, a cause of all these problems is the schema.

### SUMMARY OF THE INVENTION

In view of these problems, a purpose of the present invention is to provide a data management method and a storage medium storing a data management that can enlarge a database flexibly and efficiently without halting services to application systems even when data types different from those assumed first are required after the database has been constructed and services to the application systems has been started.

A data management method according to an aspect of embodiments of the present invention includes: assigning different indices to each of plurality of storage regions that are discriminated from each other by their addresses; forming entries corresponding to records containing address values to the storage regions so that the entries and the address values contained have one-to-one correspondence; and registering the entries in the indices assigned to the storage regions that are designated by the address values corresponding to the entries.

The indices may be managed by sorting the entries with keys for determining a sorting order of the entries, contents of the records that contain the address values corresponding to the entries being used as the keys.

The keys for determining the sorting order of the entries may be designated per entry.

The contents of storage regions designated by other address values contained in the records that contain the address values corresponding to the entries may be used as the keys for determining the sorting order of the entries.

Other address values contained in the records that contain the address values corresponding to the entries may be used as the keys for determining the sorting order of the entries.

It is preferable to change an order of the entries according to need so that the each key for the entries in the indices does not contradict with the sorting order while the records containing the address values corresponding to the entries are updated.

It is preferable to change an order of the entries according to need so that the each key for the entries in the indices does not contradict with the sorting order while the contents of the storage regions designated by the address values are updated.

It is preferable to retrieve indices with specified keys.

It is preferable to determine storage regions containing designated contents and retrieving indices corresponding to the determined storage regions.

It is preferable to retrieve further indices corresponding to storage regions designated by other address values contained in records that contain address values corresponding to entries obtained by the preceding retrieval on other indices.

Several types of software that execute these data management methods are also included in the present invention. Moreover, several types of application systems to which these management methods are applied are included in the present invention.

The term "storage medium" includes, for example, a hard disc (HD), DVD-RAM, DVD-ROM, flexible disc (FD), and CD-ROM, and also several types of memory such as RAM and ROM.

Programs to be stored in these media may be ciphered, modulated or compressed and distributed over on-line or wireless network such as intranet and Internet or once stored in storage media before distribution.

Since the present invention can be implemented by software, the present invention encompasses computer code provided to a general purpose computer on any suitable carrier medium. The carrier medium can comprise any storage medium or any transient medium such as any signal e.g. an electrical, optical or microwave signal.

As disclosed, embodiments of the present invention organizes data into data format that is accessible without using a schema by registering entries corresponding to references (pointers) to data units in indices corresponding to the data units.

This method can handle variable-length data that are hard for known databases to handle with an inflexible schema. Moreover, this method can change data format like usual data updating, which is not efficient for known databases due to schema modification.

Therefore, according to an aspect of embodiments of the present invention, databases can be enlarged flexibly and effectively without halting services to application systems even when data types different from those assumed first is required after a database has been constructed and services to the application systems has been started.

### BRIEF DESCRIPTION OF DRAWINGS

FIG. 1 is a schematic view showing a cell structure according to an aspect of embodiments of the present invention;
FIG. 2 is a schematic view showing an instance structure according to an aspect of embodiments of the present invention;
FIG. 3 is a schematic view showing a group of instances managed by a lexicon;
FIG. 4 is a schematic view showing registration of instances, that are elements constituting an employee data, in a lexicon "employee";
FIG. 5 is a schematic view illustrating a context;
FIG. 6 is a schematic view showing correspondence between original data and contexts;
FIG. 7 is a flow chart of a procedure to construct the contexts;
FIG. 8 is a schematic view showing an example of a row registered in a facade;
FIG. 9 is a schematic view illustrating a splaying operation in a spray-tree algorithm;
FIG. 10 is a flow chart of a procedure of a data management method in an embodiment according to embodiments of the present invention;
FIG. 11 is a schematic view showing registration of instances in lexicons;
FIG. 12 is a schematic view showing registration of a rows in a facade "INDEX 1" in the structure shown in FIG. 11;
FIG. 13 is a schematic view showing one row registered in the facade "INDEX 1";
FIG. 14 is a schematic view showing registration of a row registered in a facade "INDEX 2";
FIG. 15 is a schematic view showing one row registered in the facade "INDEX 2";
FIG. 16 is a schematic view showing two rows registered in each of the facades "INDEX 1" and "INDEX 2";
FIG. 17 is a schematic view showing registered rows in six contexts;
FIG. 18 is a flow chart of a retrieval procedure according to an aspect of embodiments of the present invention;
FIG. 19 is a schematic view explaining a retrieval procedure according to an aspect of embodiments of the present invention;
FIG. 20 is an illustration of a data management system as a hardware on which a data management method according to another aspect of embodiments of the present invention is installed;
FIG. 21 is a block diagram of essential components of the data management system according to another aspect of embodiments of the present invention;
FIG. 22 is a view showing an example of data with correlation among instances;
FIG. 23 is a view showing an example of data (FIG. 22) to which a telephone number is added;
FIG. 24 is a view showing an example of a context corresponding to data "SAITO";
FIG. 25 is a view showing an example of a retrieval pattern;
FIG. 26 is a view showing an example of a row having a header element "INDEX 2";
FIG. 27 is a view showing an example of a facade "INDEX 2" for which the row (FIG. 26) has been registered;
FIG. 28 is a view explaining an operation of an aspect of embodiments of the present invention;
FIG. 29 is a view explaining an operation of an aspect of embodiments of the present invention;
FIG. 30 is a view explaining an operation of an aspect of embodiments of the present invention;
FIG. 31 is a view explaining an operation of an aspect of embodiments of the present invention;
FIG. 32 is a view explaining an operation of an aspect of embodiments of the present invention; and
FIG. 33 is a view explaining an operation of an aspect of embodiments of the present invention.

### DETAILED DESCRIPTION OF EMBODIMENTS

Embodiments according to the present invention will be disclosed with reference to the attached drawings.

Efficient data-handling such as registration, updating, deletion and retrieval is achieved in embodiments of the present invention with using a data structure as a unit of data structure (called instances hereinafter), having regions (facades) in which data (rows) of pointer array indicating correlation among plurality of instances are stored, the regions being attached to regions (cells) for storing symbols (codes) for the instances.

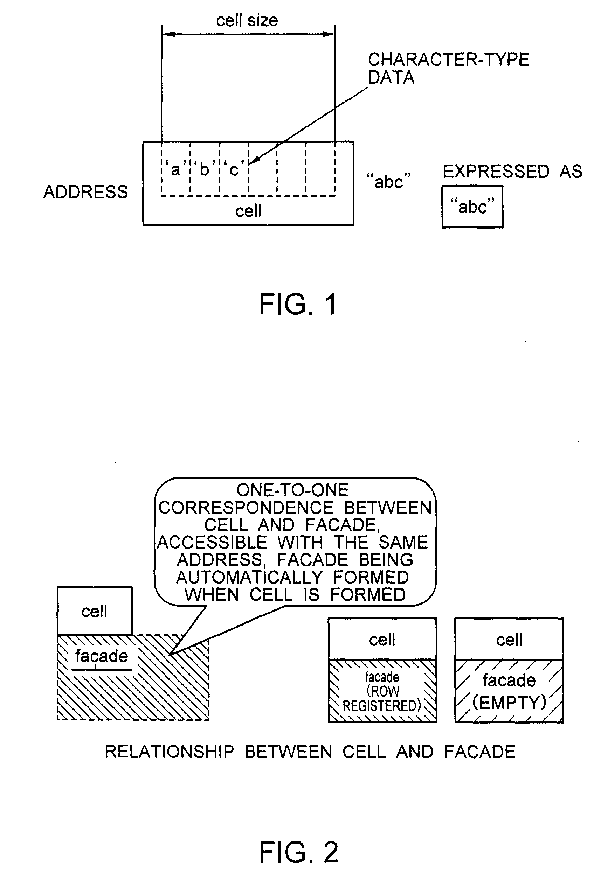

FIG. 1 is a schematic view showing a cell structure. As shown, a cell corresponds to one-dimensional array in programming languages such as C, C⁺⁺ and Java. Several data types are allowed for data used as codes stored in a cell.

Such data types include characters, byte-stream data, unsigned integer (bit length: 8/16/32/64), signed integer (bit length: 8/16/32/64), floating-point real numbers, double-precision floating-point real numbers, etc.

A cell is illustrated as a rectangle as shown in FIG. 1 through the drawings. Codes stored in a cell are indicated in a rectangle. A cell is a concept expressing a function of storing each value of "data unit", or data item in data management in general.

FIG. 2 is a schematic view showing an instance structure. A cell and a facade are simultaneously generated as elements of an instance. An instance (a cell and a facade) is designated by an address that identifies its region. Codes themselves stored in a cell do not designate an instance but are used for retrieval of an instance in a lexicon as disclosed later or identification in a situation limited by, for example, retrieval of a row in a facade.

Registered in a facade is a row used for retrieval of a context as disclosed later. A facade is a concept similar to "index" in data management in general. A row is a concept corresponding to "entry" to be registered in an index.

An index is a combination of a cell in which data is stored as codes and a facade in which correlation among data (instances) is stored as a row. Data can be structured in the present invention with no special data (table) such as RDB for data management. This is because the data storing means (cell) and the data managing means (facade) are handled as one structure (an instance).

A cell and a facade are expressed as rectangles as shown in FIG. 2 in which the upper is a cell and the lower is a facade. A facade is always attached to a cell. Rows have, however, not necessarily been stored in a facade, in other words, empty facades may exist. Empty facades and row-registered facades are illustrated differently in the drawings to discriminate between empty facades and other facades in which rows have been stored. A fixed size of region may not be applied to cells and facades in formation of instances. In other words, the size of storage regions may be flexible in accordance with the amount of codes to be stored or the number of rows to be stored.

Instances are managed by lexicons, a concept corresponding to "name of data group".

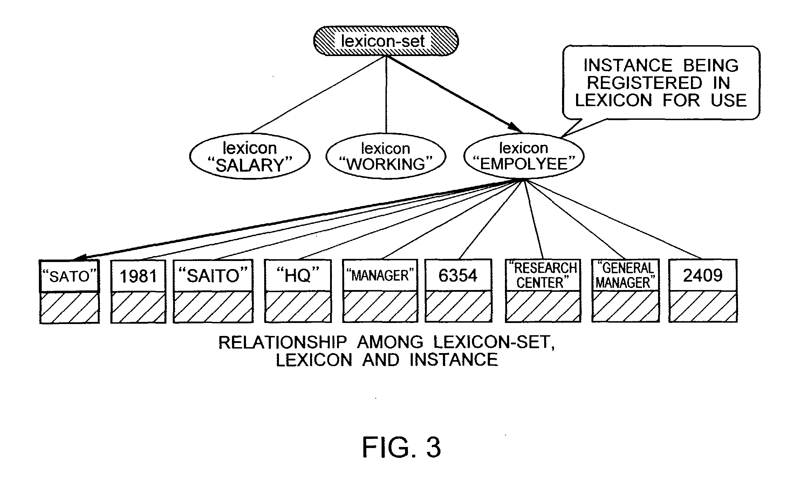

FIG. 3 is a schematic view showing a group of instances managed by a lexicon. As shown, a cell is registered in any one of lexicons. There are several lexicons managed by a lexicon-set. Each lexicon has own particular name. Any lexicon can be retrieved from the lexicon-set according to its name. An application system retrieves a lexicon required for its processing from the lexicon-set according to the lexicon's name and also retrieves cells managed under the lexicon according to the contents of the cells, thus retrieving desired instances.

FIG. 3 illustrates a process of retrieving a lexicon "employee" from the lexicon-set and then an instance "SATO".

It is preferable that there is a unique set of codes, to be stored in a cell, existing under a lexicon to which an instance of the cell belongs. In other words, it is preferable that existence of instances of two or more that contain exactly the same codes is not allowed. Codes of a cell within a limited region, or a lexicon, thus can be used as a key for identification and retrieval of the corresponding instance.

On the other hand, cells can be used like a variable. In detail, the same codes can be stored in cells of different instances, which depends on what types of data are handled by an application system. For example, there are different persons with the same family and personal name. In such a case, the same codes can be stored in different instances for managing the names as different items.

Registration of instances in a lexicon only allows data units to exist here and there, and hence instances can be retrieved in accordance with the contents of cells only.

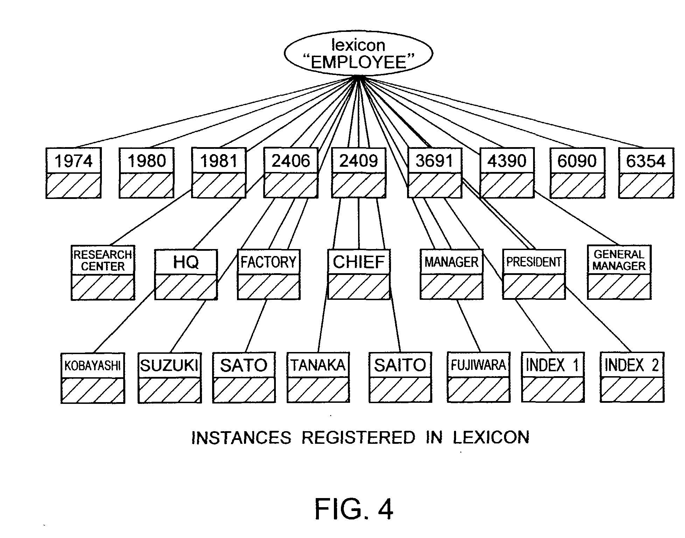

FIG. 4 is a schematic view showing instances, that are elements constituting an employee data, registered in a lexicon "employee". In this registration, instances are separately connected to the lexicon with no correlation among the instances. Databases usually handle data, a combination of such data units with correlation among the units, such as tuples in RDB and records in file.

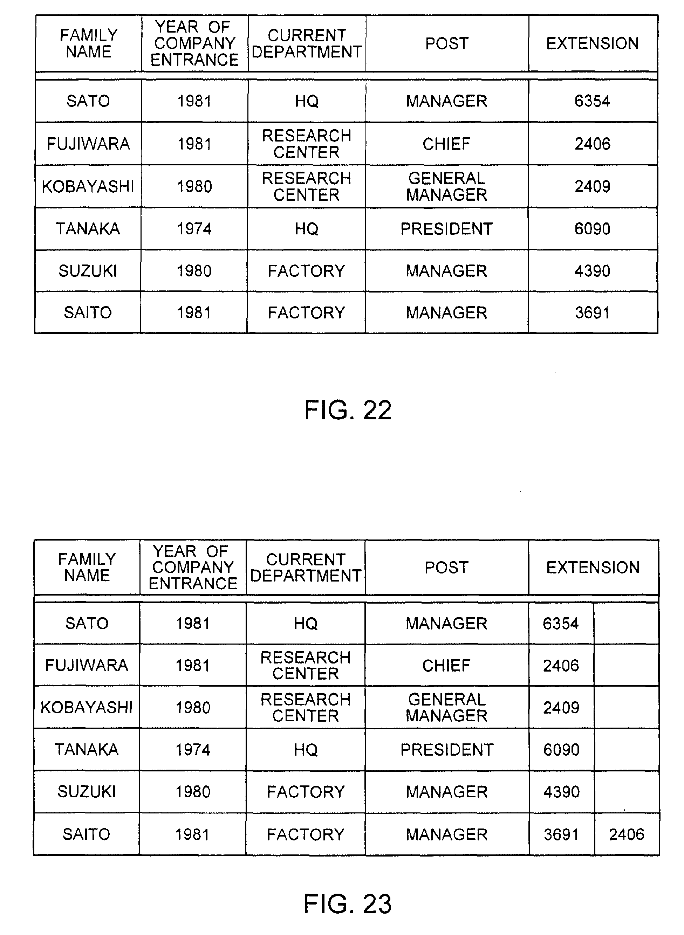

Disclosed next is a method of handling instances having correlation each other by using such data, an example being shown in FIG. 22.

FIG. 22 shows information on employees classified into categories "FAMILY NAME", "YEAR OF COMPANY ENTRANCE", "CURRENT DEPARTMENT", "POST" and "EXTENSION".

These data to be managed are stored here and there in cells of instances, as shown in FIG. 4, according to an aspect of the present invention. One of the features of an aspect of the present invention is that duplicated data can be managed by one cell. For example, in FIG. 22, the year of company entrance for the three out of six employees is 1981. An aspect of the present invention does not require three pieces of data "1981" to be stored. In other words, the aspect of this invention manages just one instance having a cell storing the data "1981", as shown in FIG. 4. This is because this instance can be designated again and again according to necessity, as disclosed later in detail. This is the same for duplicated data such as current department and post. Data storage regions can therefore be drastically reduced for such duplicated data according to an aspect of the present invention.

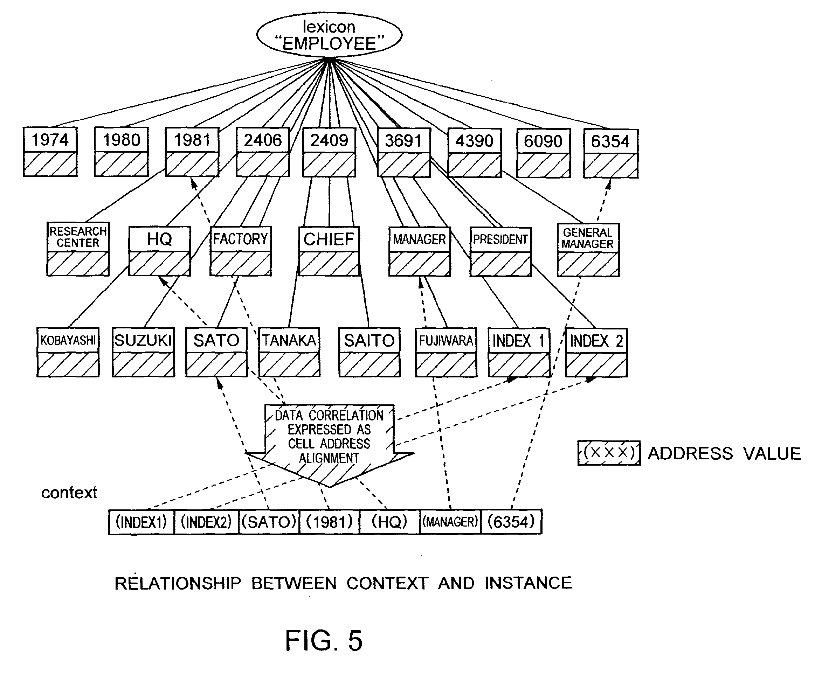

A structure called "context" such as shown in FIG. 5 is used in an embodiment of the present invention in a method of handling data stored here and there in the lexicon "employee" as one original data row such as "SAITO·1981· FACTORY·MANAGER·3691" as shown in FIG. 22.

A context is a concept corresponding to "record" in data management in general. In other words, a context is one-dimensional array of pointer data for referring to instances. In detail, stored in a context is not data (codes) itself but a pointer data indicating an instance that manages the codes. In this embodiment, address of each region storing an instance is used as a pointer to the instance. A context is structured so that instances of several cells to be correlated with each other can be designated. Cells can be looked up using pointer data stored in a context.

In the drawings, links are indicated as rectangles like cells and a cell designated by a pointer is enclosed within parentheses () for expressing the pointer. For example, (SAITO) means a pointer for referring to an instance of a cell containing the contents "SAITO".

A context expresses correlation among element data stored in instances. Data correlation depends on not only static relation among original data such as shown in FIG. 22 but also a retrieval method required for an application system. A context is therefore structured under consideration of a retrieval method required for an application system based on original data in the application system.

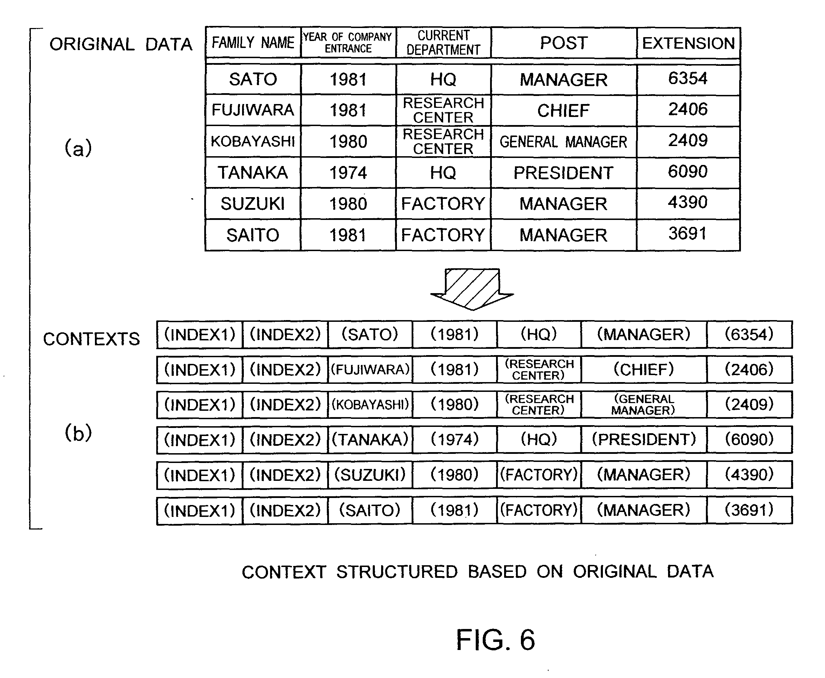

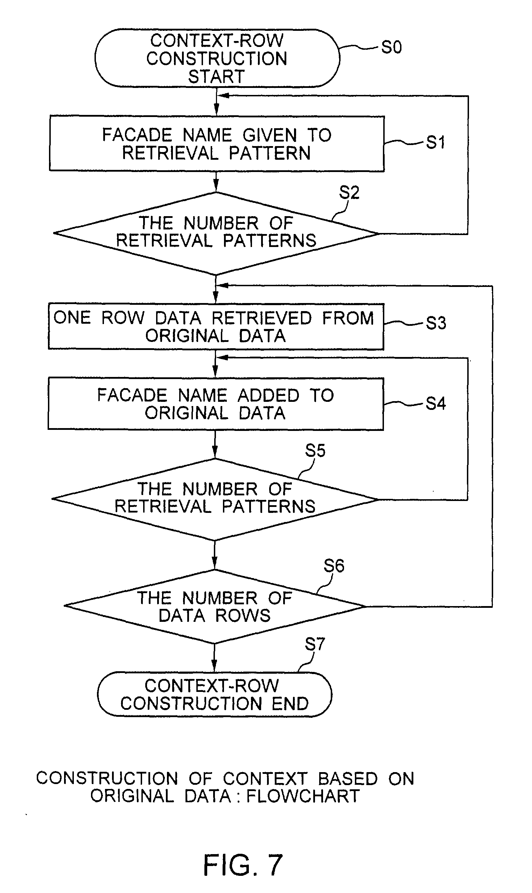

FIG. 6 indicates correlation between original data and contexts. FIG. 7 is a flow chart of a procedure to construct a context.

It is assumed in FIG. 6 to develop an application system for retrieving original data with two retrieving patterns. A first step is to add data expressing the two retrieving patterns to the original data before installation in a data management system. This data functions as a facade as disclosed later.

In detail, as shown in FIG. 7, a facade name is given to each retrieving pattern in steps S1 and S2. For example, names "INDEX 1" and "INDEX 2" are given to the two retrieving patterns, respectively. In addition, as shown in FIG. 4, these retrieving pattern data ("INDEX 1" and "INDEX 2") are added to the lexicon.

Next, one row data in the original data is retrieved in step S3, followed by adding facade names of the retrieving patterns to respective one row data. One row data is a data array of codes themselves. This data array is replaced with a pointer array that designate instances for managing codes to make up a context.

These steps are repeated until the number of repetition reaches the number of retrieving patterns in step S5 and also the number of original data rows in step S6.

Structured in this example are six types of contexts that correspond to the original data, as shown in FIG. 6(b).

A plurality of elements (pointers) in each context are selected and rearranged (permutation of context elements) are registered as a row in a facade of an instance that is to be looked up by the header element of the permutation so that several contexts can integrated with each other for retrieval.

The contexts and rows have their own addresses so that they are accessible using the addresses as pointers like the instances. These addresses are used as return values for results of processing such as retrieval by a data management system.

A row and the context that is the basis of the row are correlated with each other by pointers so that element-to-element correspondence between the row and the context can be mutually determined. It is determined in registration of rows in facades that to what number of elements from the header is used as a combined key for sorting the rows in the facades.

A combined key is an ordered collection of keys for comparison. As comparison between combined keys is made, any pair of the same lower-order keys are compared only when each pair of the same higher-order keys is pairwise same each other. When they do not coincide, the relation (order) between the pair of highest order keys that do not pairwise coincide is taken as the result of the comparison between them. Comparison between elements as keys is made by comparing codes with each other, that have been stored in cells of instances that are looked up by the elements.

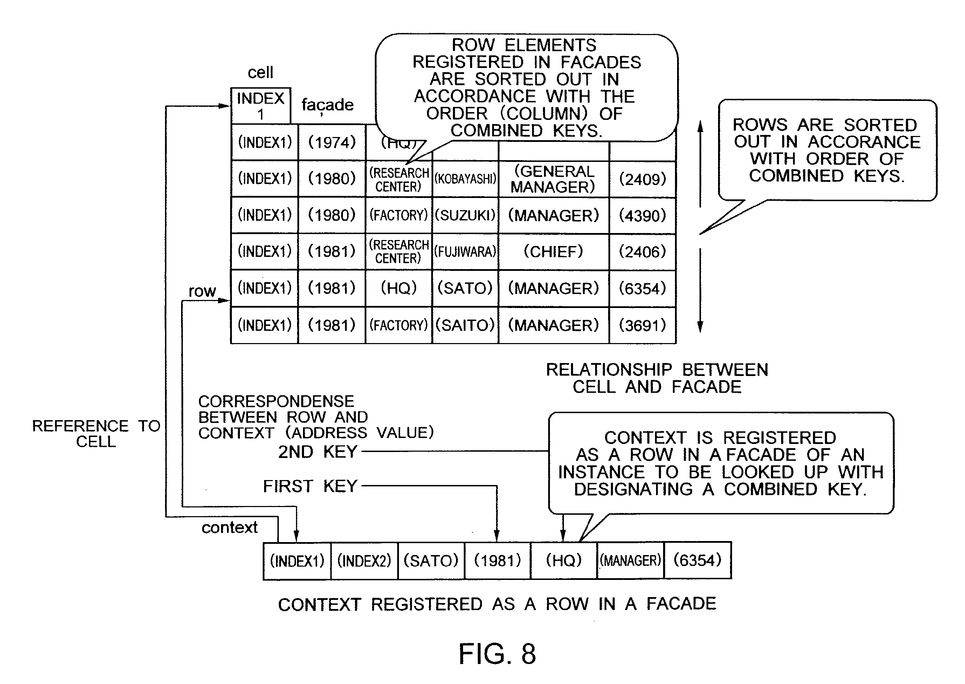

FIG. 8 is a schematic view showing an example of rows registered in facades. A row having an element storing a pointer (INDEX 1) as the header has been stored in a façade of an instance (INDEX 1).

Registration of contexts as rows in facades does not necessarily require all data of the contexts. For example, in FIG. 8, (INDEX 2) is not involved in rows registered in the facades (INDEX 1) because they do not require (INDEX 2) that is to be used for another retrieval. Moreover, the elements used as combined keys are not all elements in a row but a designated number of elements from the header. For example, in FIG. 8, the fourth row in the façade (index 1) uses only, the elements "1981" and "HEAD QUARTERS (HQ)" (also included in the context corresponding to the row) as the first key and the second key, respectively, and the rest of the elements of the row are not interested in the sorting order of the row in the facade.

As understood from the foregoing description, a row is registered in a facade based on a context. The contents of the row are rearranged as shown below in a designated order when registered as the row.
Context:(INDEX1)(INDEX2)(SATO)(1981)(HQ)(MANAGER)(6354)
Row:(INDEX 1)(1981)(HQ)(SATO)(MANAGER)(6354)

In the row, (INDEX1) indicates the facade in which this element has been registered, and (1981) and (HQ) indicate the first and the second keys, respectively, whereas (SATO)(MANAGER) and (6354) are not used as keys.

The data management method disclosed above can be realized by for example, using a splay-tree algorithm particularly for facade-row portions.

The splay-tree algorithm is disclosed, for example, in Robert E. Tarjan, "Data Structure and Network Algorithms", the Society for Industrial and Applied mathematics, 1993.

The splay-tree algorithm executes a splaying operation for each occurrence of data access with a dynamically varying binary-tree structure.

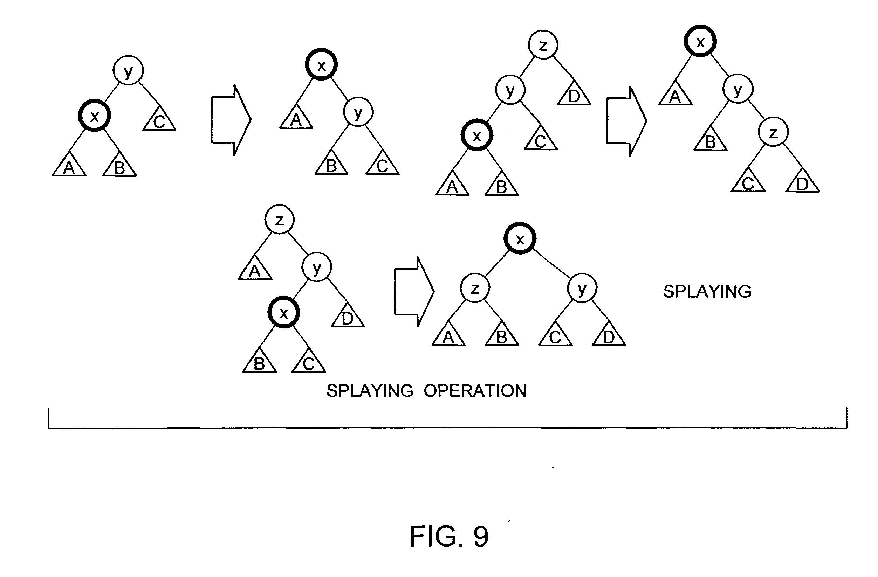

FIG. 9 is a schematic view illustrating a splaying operation in the splay-tree algorithm.

In FIG. 9, the splaying operation is performed as follows:

For example, a retrieval operation starts at a root and goes down through the tree while comparing nodes with a retrieval key and finally reaches an object (x) to be retrieved.

Tree structures surrounding the node (x) correspond to any one of the three patters shown in FIG. 9. One of the patterns is selected to reconstruct the tree structure. The node (x) goes up the tree structure by one stage and at a new position, selects any one of the tree structures while referring to again the tree structures surrounding the node (x), and the processing proceeds with the same way as above. This processing continues and finally reaches the root of the tree.

Through the splaying operation, a binary-tree structure is constructed which offers efficient retrieval and update adapting to partial data access. This binary-tree structure can be used for row management in facades to yield efficient data sorting facilities.

In addition to the splay-tree algorism, several methods of managing sorted data are known and which are also effective in data management.

The data management method illustrated through FIGS. 1 to 8 is an essential feature of the present invention and provides advantages as described above with no particular hardware systems.

### (EXAMPLE)

Disclosed next in detail is a data-registration and -retrieval method according to the present invention using sample data.

Explained first is data to be managed in this embodiment. The original data to be managed is employee data shown in FIG. 22. The data items are "FAMILY NAME", "YEAR OF COMPANY ENTRANCE", "CURRENT DEPARTMENT", "POST" and "EXTENSION", six in total.

These data are classified using two types of retrieval patterns. The first pattern uses "YEAR OF COMPANY ENTRANCE" as the first key and "CURRENT DEPARTMENT" as the second key. The second pattern uses "EXTENSION" as the first (only) key.

Disclosed next is how rows are formed for each data based on a context and how it is registered in facades.

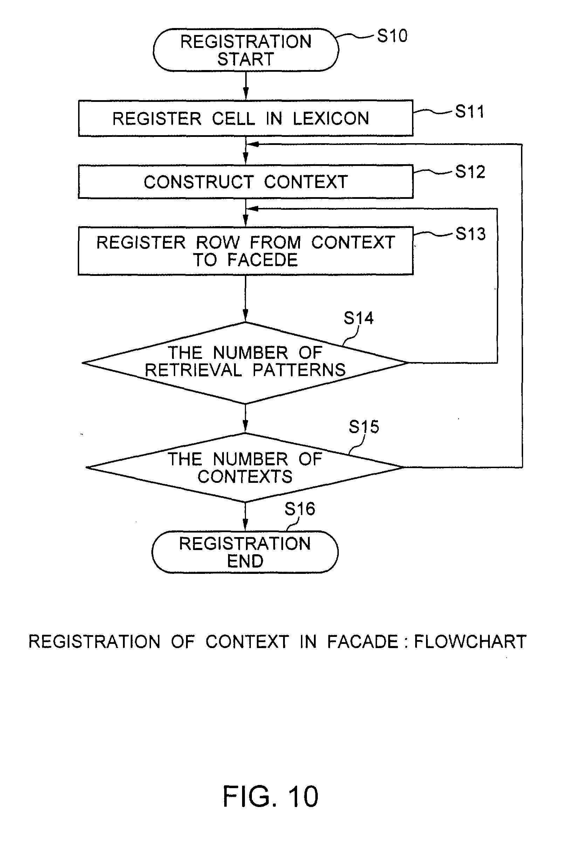

FIG. 10 is a flow chart of a procedure of a data management method in this embodiment.

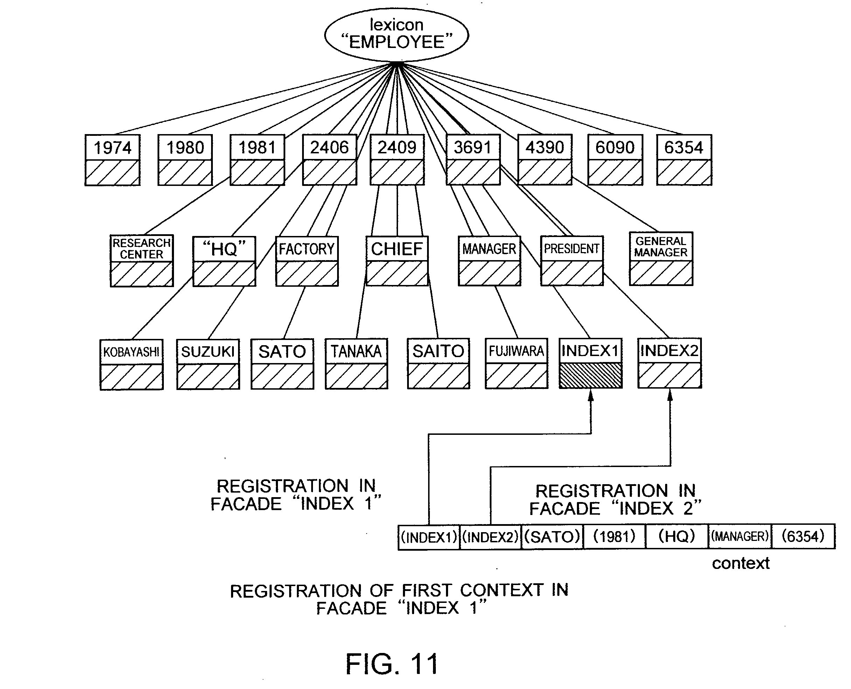

Firstly, in step S11, instances that constitute original data are registered in a lexicon to construct a tree-structure of the lexicon and the instances as illustrated in FIG. 11.

A context is constructed next in step S12. The context in this embodiment is constructed for example as shown in the lower right of FIG. 11.

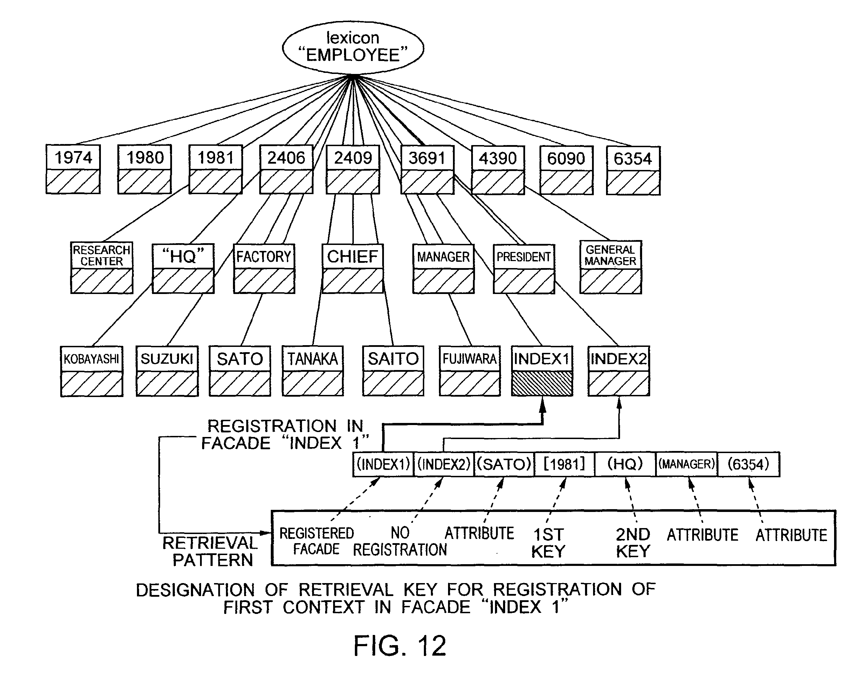

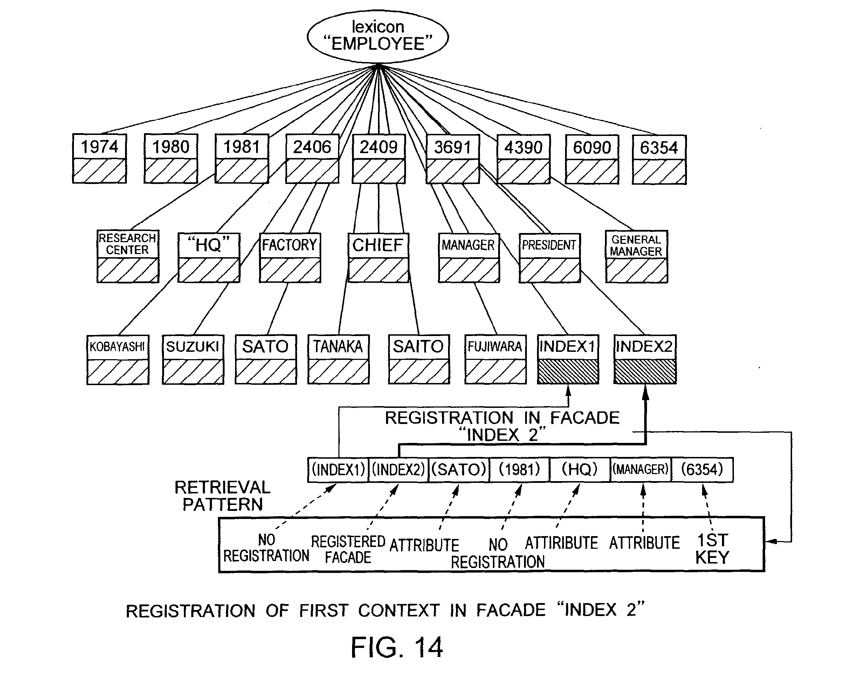

A row is formed using this context and registered in the specific facade. In this embodiment, the context is registered as rows in facades "INDEX 1" and "INDEX 2", respectively, of instances in accordance with retrieval patterns shown in FIGS. 12 and 14.

In detail, firstly, a row is registered in the facade "INDEX 1" in accordance with the retrieval pattern shown in FIG. 12.

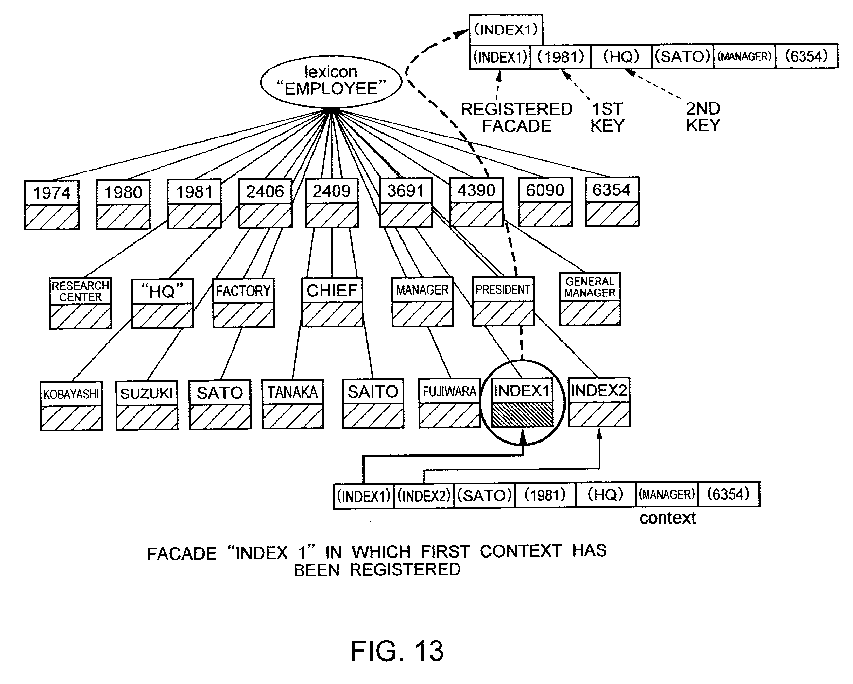

As shown in FIG. 13, one row is registered in the facade "INDEX 1". In detail, the registered facade, the first key, the second key and the other elements are selected and aligned from the context to form the row for registration.

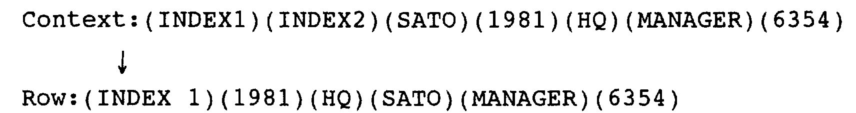

It should be noted that (INDEX 2) is not included in this row and the head (INDEX 1) is looking up the instance of the facade in which the row has been registered.

This registration results in that one row has been registered in the facade "INDEX 1" whereas the facades of other instances have been null as they are.

Next, in step S14, the row-registration operation described above is repeated by the number of retrieval patterns.

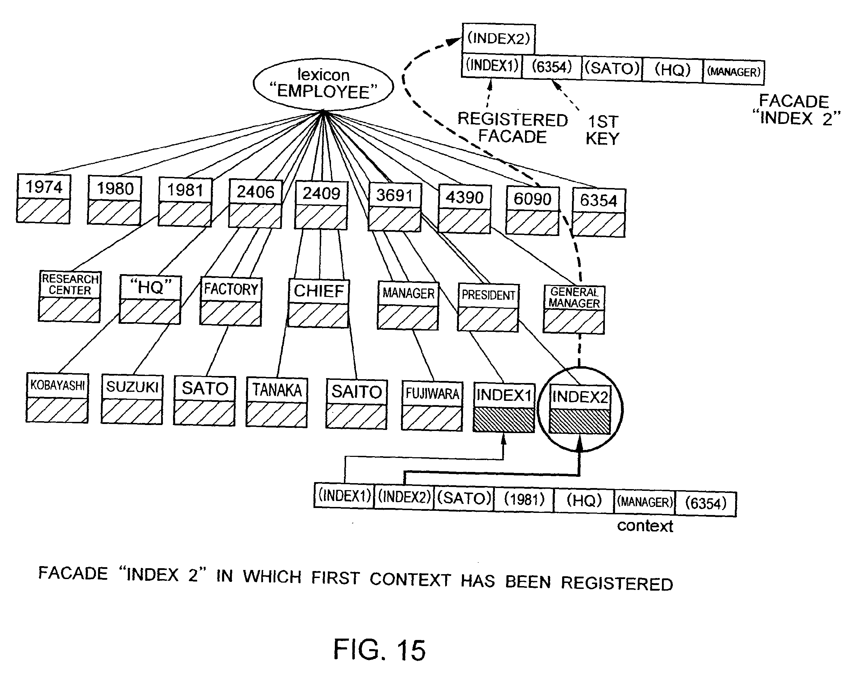

As shown in FIG. 14, a row is registered in the façade "INDEX 2". This results in that one row has been registered in the facade "INDEX 2", as shown in FIG. 15.

In detail, the registered facade, the first key and the other elements are selected and aligned from the context to form the row for registration.

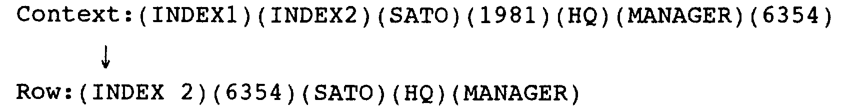

It should be noted that (INDEX 1) and (1981) are not included in this row and the head (INDEX 2) is looking up the instance of the facade in which the row has been registered.

This registration results in that one row has been registered in each of the facades "INDEX 1" and "INDEX 2" whereas the facades of other instances have been null as they are.

In step S15, the procedure from step S12 for the contexts described above is repeated by the number of contexts and also the number of data.

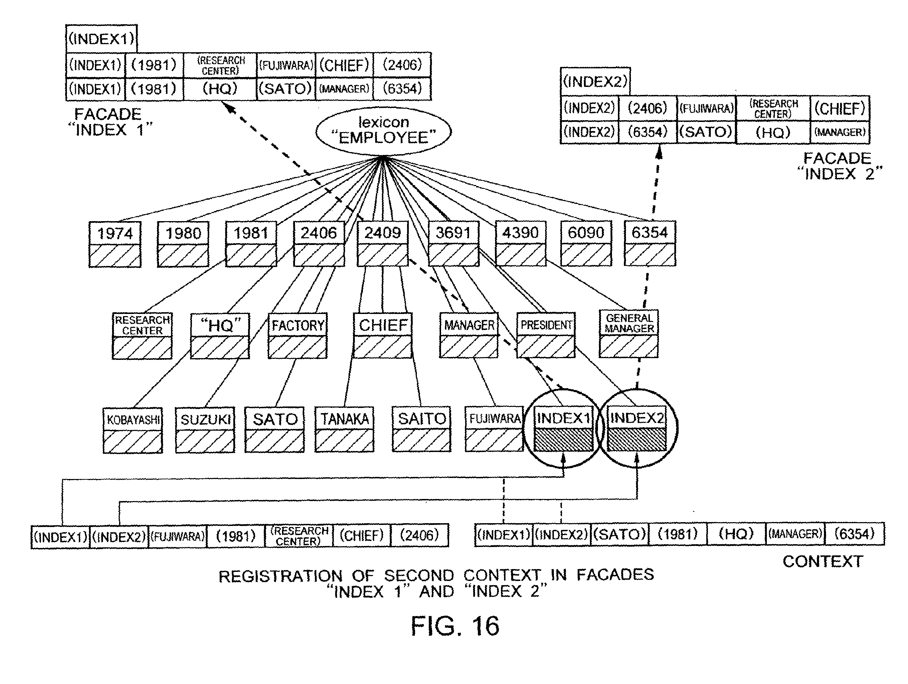

Firstly, the second context is registered in the facades "INDEX 1" and "INDEX 2" like disclosed above. FIG. 16 is a schematic view showing registration of two rows registered in each of the facades. Each row has been sorted in the facade in accordance with the order of combined keys.

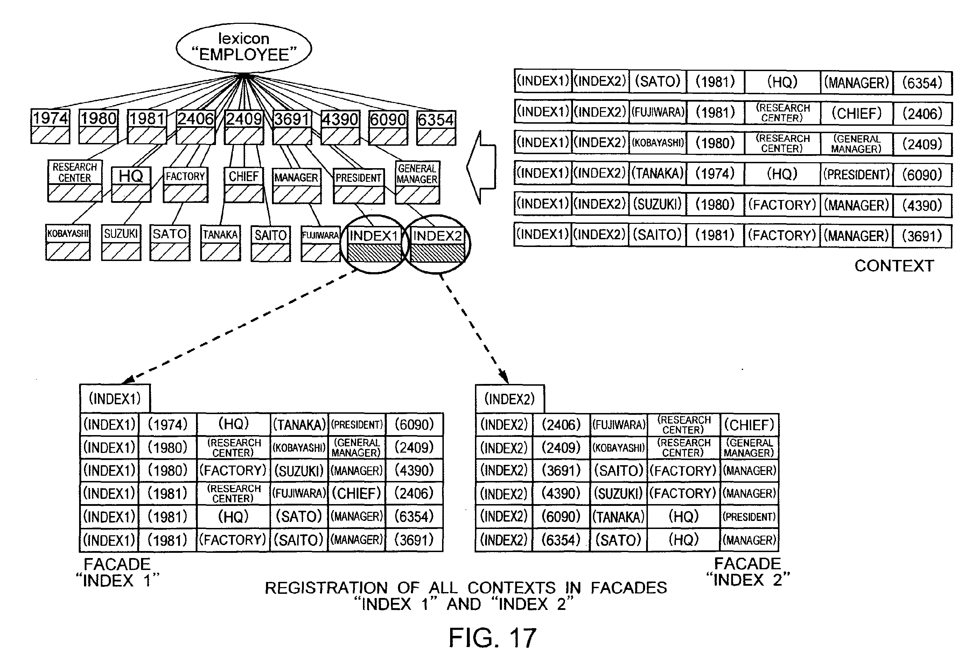

Accordingly, contexts for all the six data are formed as disclosed above and the rows for retrieving each context are registered in the facades. FIG. 17 is a schematic view showing registered six contexts and twelve rows. Now, all data have been registered for retrieval.

Disclosed next is a retrieval procedure in a data management method according to an aspect of the present invention.

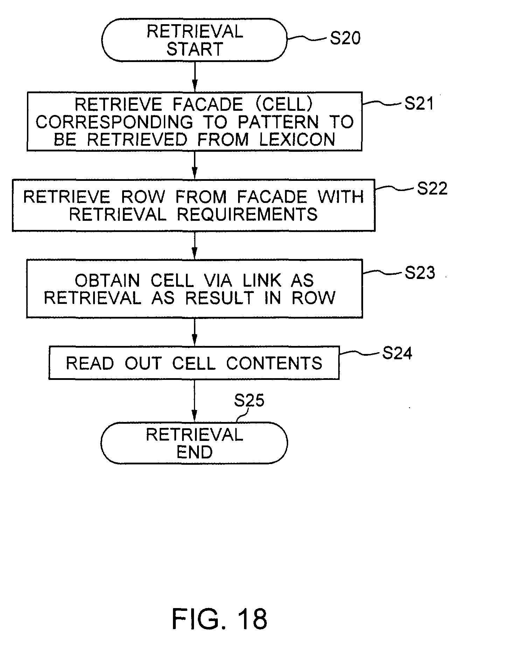

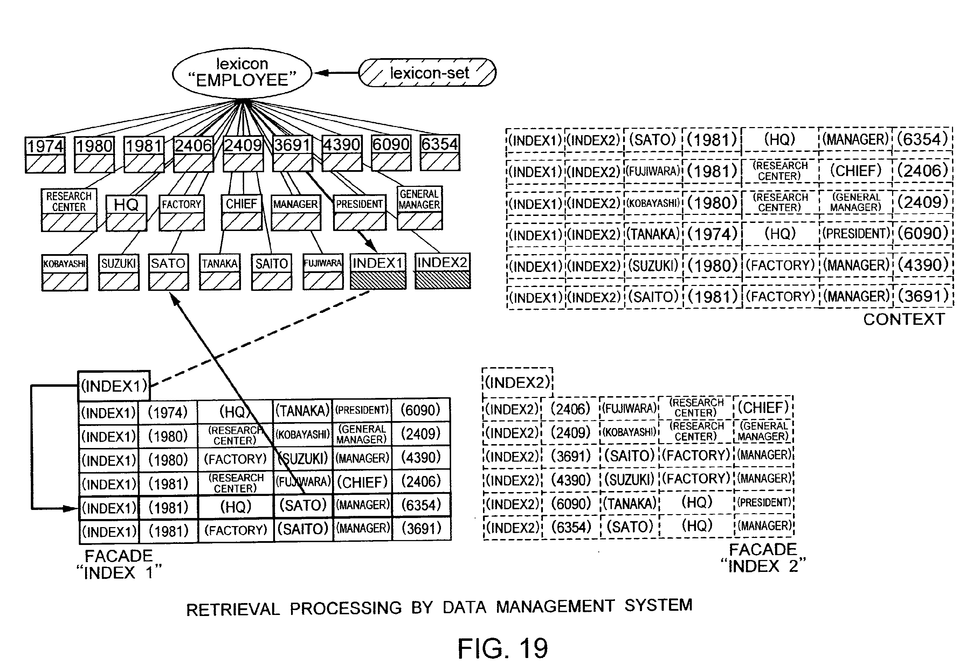

FIG. 18 is a flow chart of a retrieval procedure according to the aspect of the present invention. FIG. 19 is a schematic view explaining the retrieval procedure according to the aspect of the present invention.

Retrieved first in step S21 is a facade corresponding to a pattern to be retrieved. In detail, a lexicon to be required for an application system is retrieved from a given lexicon set by using the name of the lexicon. For example, a lexicon "EMPLOYEE" is retrieved in this embodiment.

Retrieved next is data to be required from the lexicon. The facade must be searched first, however, in the embodiment, an instance that contains the facade is searched in the lexicon. In detail, an instance "INDEX 1" is retrieved from the lexicon using the codes "INDEX 1" as a key in this embodiment.

Next, a row registered in the facade is retrieved using a desired key in step S22. In detail, a desired row is retrieved using the first key = "1981" and the second key = "HQ".

In step S23, a desired data is found out in the elements of the row using a pointer. In detail, data to be required for an application system is found out from the retrieved row. In this embodiment, a desired item is "FAMILY NAME" in the retrieved data, so that a desired data "SATO" is retrieved from the cell of the instance designated by the pointer, the fourth element in the row.

A cell is directly looked up from a row in the example disclosed above. In a more complex retrieval, however, it is possible to go back to a context for accessing another data. In either way, an essential procedure is to find out a row from facades for constructing a retrieval procedure.

The instance "INDEX 1" is retrieved from a lexicon in the above disclosure. However, not only that, the instance "INDEX 1" can be retrieved in other ways, for example, by retrieving a context that corresponds to an entry registered in a facade of the instance "INDEX 2", thus the instance "INDEX 1" being retrieved while the header element of the retrieved context is looked up.

In other words, a facade can be decided by a usual data retrieving means, which is fundamentally different from known databases in which a schema- and metadata-managing means is separated from a usual data-managing means.

Disclosed next is a data management system for executing the data management method according to an aspect of the present invention.

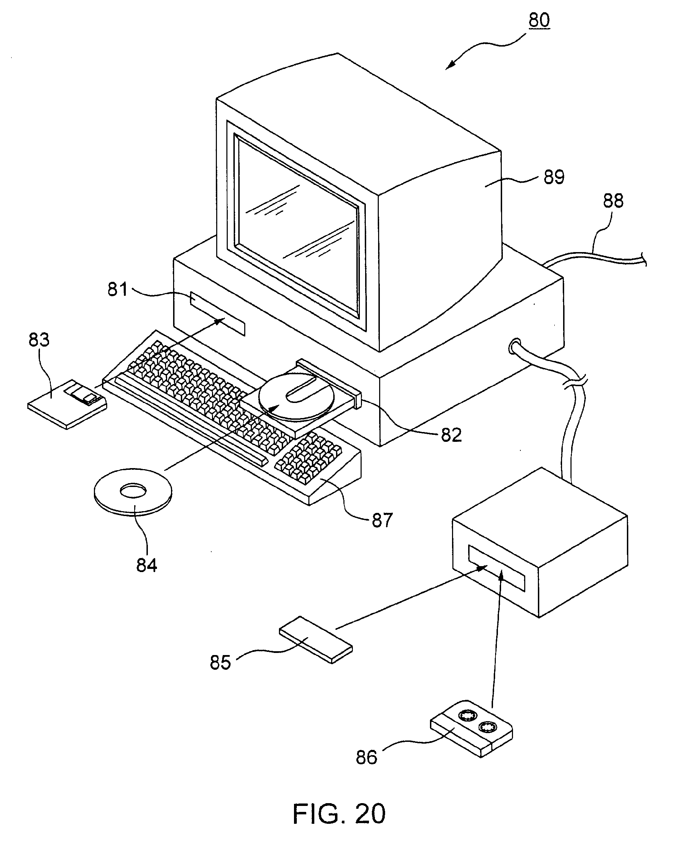

FIG. 20 is an illustration of a data management system as a hardware on which a data management according to the aspect of the present invention is installed.

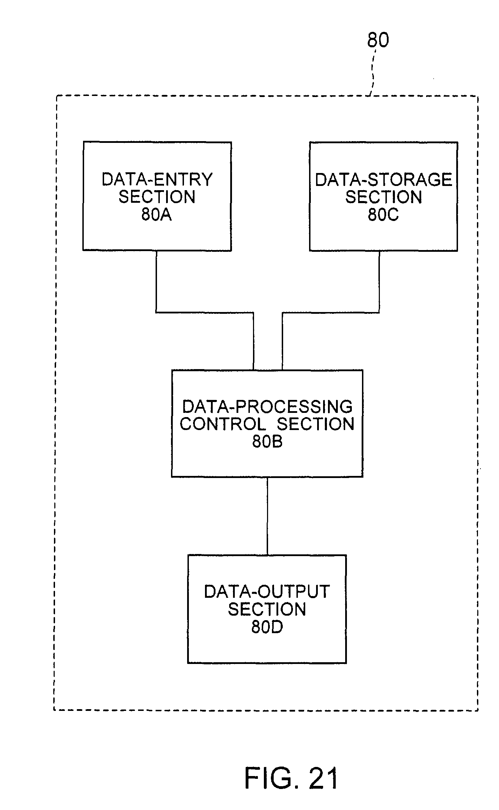

FIG. 21 is a block diagram of essential components of the data management system according to the aspect of the present invention.

A data management system 80 is equipped with a data-entry section 80A, a data-processing control section 80B, a data-storage section 80C and a data-output section 80D.

The data-entry section 80A accepts data to be managed from an external data-input means such as a floppy disc apparatus (floppy disc drive) 81 and an optical disc apparatus (optical disc drive) 82.

A floppy disc 83 is inserted into the floppy disc drive 81 or an optical disc 84 such as CD-ROM and DVD is inserted into the optical disc drive 82, through diskette slot, for a retrieval operation to supply data stored in these storage media into the system.

Moreover, another drive apparatus may be connected to the system so that a ROM 85 as a semiconductor memory or a cassette 86 as a magnetic tape apparatus can be used.

Furthermore, data may be supplied to the system via a keyboard 87, or from another computer or a data-output apparatus through an on-line network 88.

Data thus supplied as described above is stored in the data-storage section 80C while a lexicon set, lexicons, facades, contexts and rows are constructed as disclosed with reference to FIGS. 1 to 19.

The sequential processing is executed by the data-processing control section 80B. Also executed by the control section 80B are row-sorting, splaying of data stored in facades and so on.

Data thus managed and sorted as described above are output from the data-output section 80D according to necessity. The output section 80D can output desired data through several types of media such as the floppy disc 83 and the on-line network 88.

In an aspect of the present invention, as disclosed later, a semiconductor memory such as RAM can be used as the data-storage section 80C, which allows high-speed data management for higher data-management performance compared to known systems.

An aspect of the present invention involves software that can execute the data management method disclosed with reference to FIGS. 1 to 19. This software can be stored on a storage medium such as the optical disc 84 like the data-entry section 80A and down loaded to the data-processing control section 80B of the management system 80. Such software may also be down loaded through the on-line network 88.

Advantages of the data management method and system according to the present invention disclosed above are explained using the sample data.

Explained first is the case that, in FIG. 22, the extra telephone number "2406" is added to "3961" for the data "SAITO" among the data to be handled, as shown in FIG. 23.

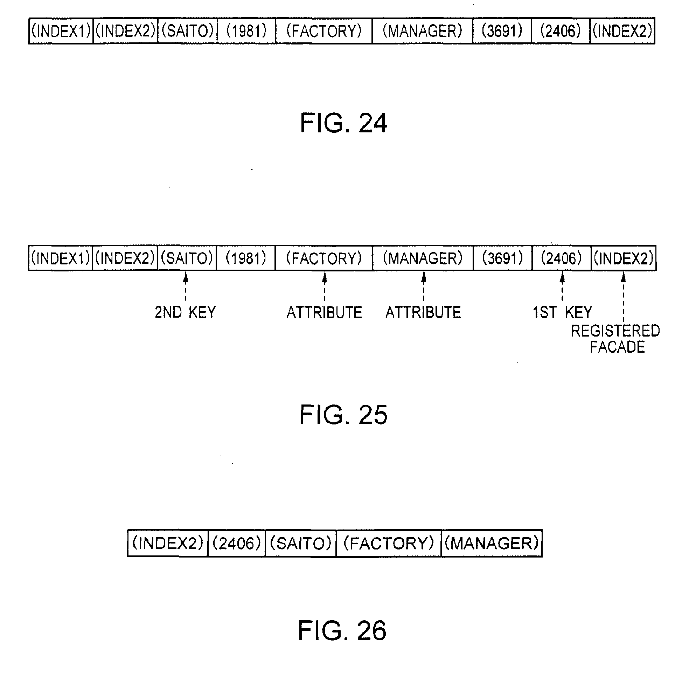

Even if the number of elements is different for each data like the above case, an aspect of this invention does not require the maximum number for the number of elements of all contexts or lots of same elements with some different elements over several contexts. In addition, an aspect of this invention does not require distribution of one data over several contexts nor addition of its identity data. For example, a context corresponding to the data "SAITO" can be formed as shown in FIG. 24.

This embodiment has a restriction in that the header element of a row to designate a facade must have one-to-one correspondence with elements of a context when the row is formed based on the context and registered in the facade.

In other words, the maximum number of rows that can be formed based on one context equals to the number of elements of the context. Facades that are allowed for registration are only those of instances that are referred to by each element. Registration of several rows in the same facade thus requires several elements referring to the same instance.

In the case explained above using the sample data, data must be retrieved using a telephone number as the first key, which thus requires registration of rows for which two telephone numbers are used as keys in the facade "INDEX 2" for data having the two telephone numbers.

In detail, since two rows must be formed and registered in the facade "INDEX 2" based on a context corresponding to the data "SAITO", not only the element referring to the telephone number "2406", but also another element referring to the instance "INDEX 2" is added as the last element.

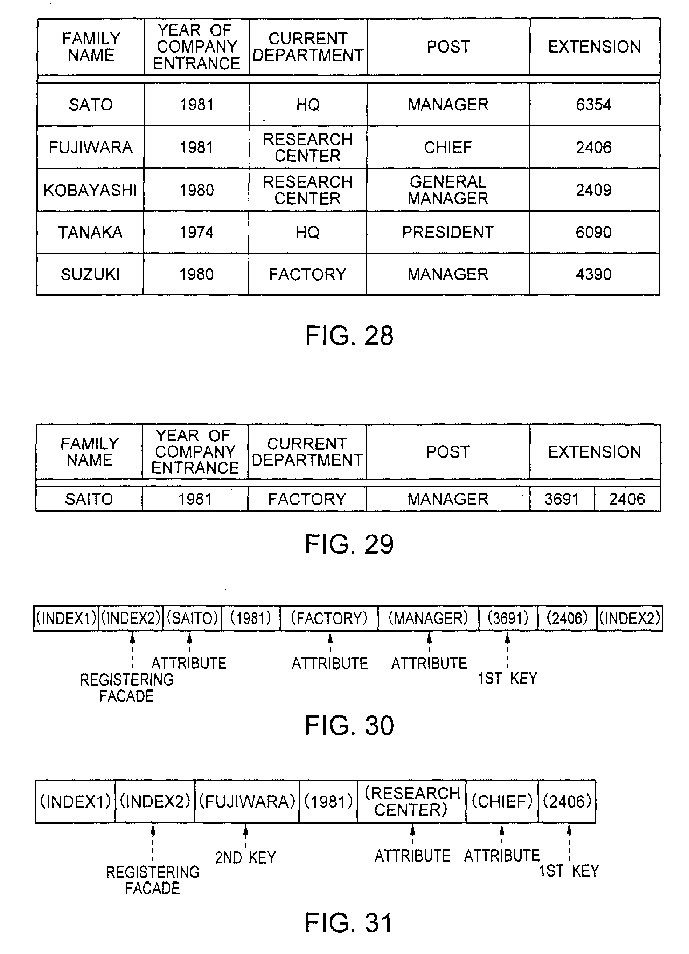

The row having the (last) element "INDEX 2" as the header is formed as shown in FIG. 26 in accordance with the retrieval pattern shown in FIG. 25 required for an application system. This retrieval pattern is different from that shown in FIG. 14 in that "FAMILY NAME" is not designated as a mere attribute but the second key. This is because, since a row having "2406" as the first key is already existed in a facade, a combined key is added to be discriminated from the first key. In addition, for the row having "2406" as the first key and already existed in a facade, the number of combined keys for the row is changed so that it matches the retrieval pattern having "FAMILY NAME" as the second key shown in FIG. 31 to be discriminated from the row described above which is newly added for the row having "2406" as the first key and already existed in a facade.

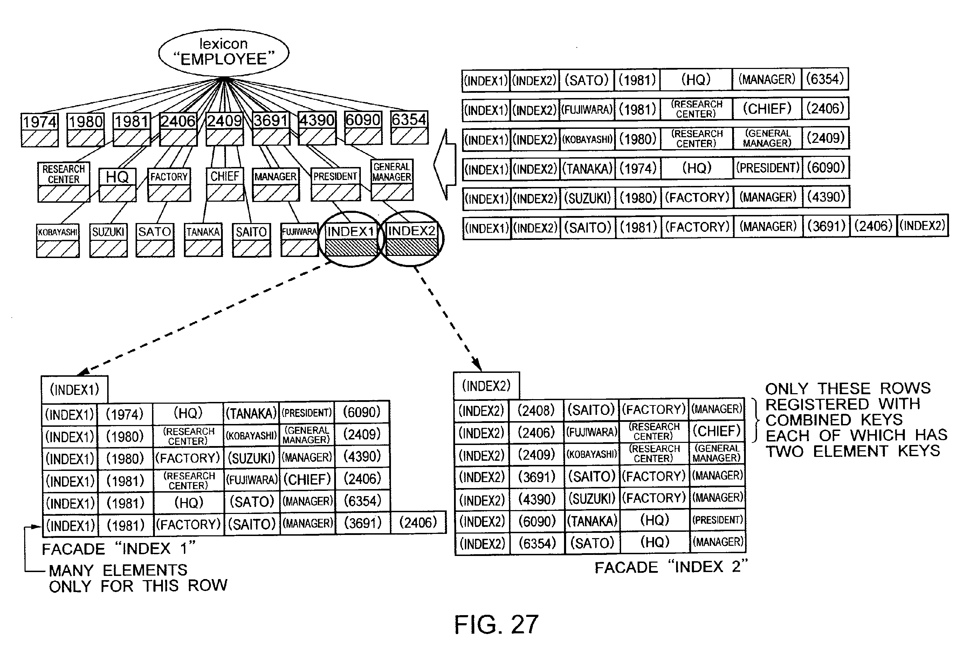

Also for a row to be registered in a facade "INDEX 2", since there is no row having "3961" as the first key in a facade before registration, discrimination is possible by registration of a row formed in accordance with a retrieval pattern shown in FIG. 30 having "3691" as the first key with other mere attributes. The facades "INDEX 2" after registration and correction of these rows are shown in FIG. 27.

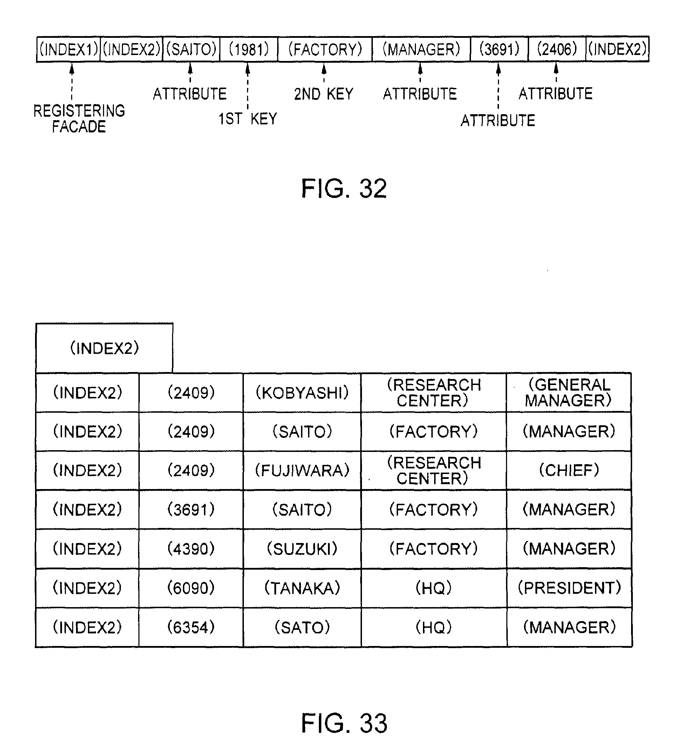

Each row in the facades "INDEX 1" must include extension involved in the corresponding context as an element. A row having the header (INDEX 1) is formed by means of a retrieval pattern having one more element compared to other rows, as shown in FIG. 32.

Illustrated in FIG. 27 is the overall data structure constructed and registered by the data management method in this embodiment including the sample data with the facades "INDEX 1", "INDEX 2", the contexts, and the lexicons.

There are six contexts formed in FIG. 27 for six input data for which the data "SAITO" only is different in data type. The original data and the data (contexts) registered in a database have a good correspondence, thus not so long time being required for making correspondence by distribution or duplication. Moreover, addition of null elements is not required for forming the same data type, in other words, different types of data can be registered in a database.

In addition, since rows can be registered in facades in accordance with any retrieval pattern required for an application system per context, rows can be registered in a database so that contents just enough for the application system can be retrieved. In the sample data, data (context) containing two telephone numbers can be retrieved from one facade using each telephone number as a key.

An aspect of the present invention provides organized different types of contexts per facade by registration of rows, which can be retrieved using combined keys. The facades in the aspect of this invention have a function of collecting data that are similar to each other to be compared and sorted, like known RDB tables and views. Each façade is, however, not subjected to any restrictions except that the header element of a row to be registered in a facade is an element of a context that looks up the instance of the facade. Thus, the aspect of the present invention does not need to store and manage any restriction information (so called schema information) on data types and contents to be collected, which is required for known databases. The aspect of the present invention neither require any specific operation (application system) for reconstructing a database nor interrupting services to usual application systems. This is because the aspect of this invention can execute updating as mere data updating, which must be executed as schema modification in the known databases.

This is explained using sample data with assumption that a database (lexicons, instances, contexts and rows) has been constructed for an application system under user requirements that data such as shown in FIG. 28 only be handled, however, the user now has to handle another different data type such as two extension numbers, as shown in FIG. 29.

The present invention requires almost no change in a database already constructed with the data shown in FIG. 28 and also no reconstruction except that a new row must be registered in a facade with formation of the above context based on the data shown in FIG. 29.

Accordingly, an aspect of the present invention provides a data management system that can handle various data types together and change data types and contents, which are difficult for known databases using schemas.

Moreover, a data management method according to an aspect of the present invention can efficiently process data that have been registered and updated. Data addition has already been explained as data registration. Explained here is the case in which an element of a registered context is to be updated.

It is further assumed for the above sample data that the database has been changed such that (2406) of the context shown below refers not to the instance "2406" but to the instance "2409".
Context:(INDEX1)(INDEX2)(SAITO)(1981)(FACTORY)(MANAGER)( 3691)(2406)(INDEX2)

This context is changed as shown below:
Context:(INDEX1)(INDEX2)(SAITO)(1981)(FACTORY)(MANAGER)( 3691)(2409)(INDEX2)

With change in row as follows:

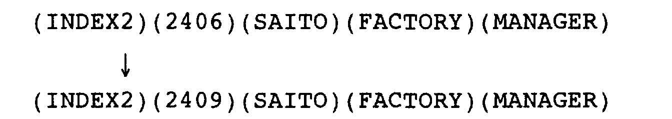

This row is shifted just before the row shown below for keeping the sorting order in the facade "INDEX 2". (INDEX2) (2409) (KOBAYASHI) (RECARCH CENTER) (GENERAL MANAGER)

With this change, there are now two rows each with the first key (2409). These two rows can be discriminated with each other using the second key (KOBAYASHI) that is provided by changing the number of keys of each combined key.

No shift in the facade is required for the other two rows shown below formed based on the same context because these rows are not affected by the key change.
(INDEX2)(3691)(SAITO)(1981)(FACTORY)(MANAGER)
(INDEX1)(1981)(FACTORY)(SAITO)(MANAGER)(3691)(2406)

The determination and operation for such change made above can be efficiently performed because of management of correspondence between elements of a context and a row containing those elements.

For a change not in destination of an element in a context (row) to look up but from "2406" to "2409" for the contents (codes) of a cell in the instance "2406", the rows shown below that have references to the same instance can be changed simultaneously to the rows shown further below.

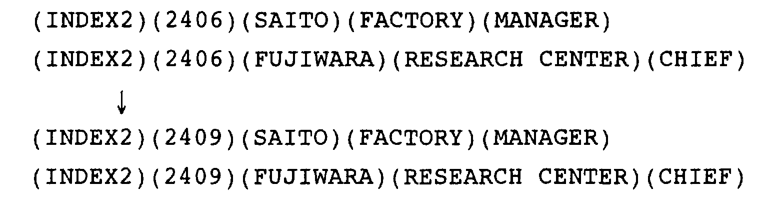

This change is followed by change in the order of rows in the façade "INDEX 2", as shown in FIG. 33. The instance that is looked up by (2409) of these rows is different from the instance that is looked up by (2409) of the row shown below even though both instances have the identical contents.
(INDEX2)(2409)(KOBAYASHI)(RESEARCH CENTER)
(GENERAL MANAGER)

This is achieved by discrimination between instances not with cell contents but with addresses.

Accordingly, since change in registered data can be done by just partial data change, thus the present invention requiring no re-registration of vast amounts of data.

As disclosed above, a data management method according to the present invention can flexibly and dynamically handle several data types with efficient retrieval and updating.

It is further understood by those skilled in the art that the foregoing description is/are a embodiment(s) of the disclosed device and that various change and modification may be made in the invention without departing from the spirit and scope thereof.

## Claims

1. An data management method comprising:
assigning different indices to each of plurality of storage regions that are discriminated from each other by their addresses;
forming entries corresponding to records containing address values referring to the storage regions so that the entries and the address values contained have one-to-one correspondence; and
registering the entries in the indices assigned to the storage regions that are designated by the address values corresponding to the entries.

2. The data management method according to claim 1, wherein the indices are managed by sorting the entries with keys for determining a sorting order of the entries, contents of the records that contain the address values corresponding to the entries being used as the keys.

3. The data management method according to claim 2, wherein the keys for determining the sorting order of the entries are designated per entry.

4. The data management method according to claim 2, wherein contents of storage regions designated by other address values contained in the records that contain the address values corresponding to the entries are used as the keys for determining the sorting order of the entries.

5. The data management method according to claim 2, wherein other address values contained in the records that contain the address values corresponding to the entries are used as the keys for determining the sorting order of the entries.

6. The data management method according to claim 2 further comprising changing an order of the entries according to need so that the each key for the entries in the indices does not contradict with the sorting order while the records containing the address values corresponding to the entries are updated.

7. The data management method according to claim 4 further comprising changing an order of the entries according to need so that the each key for the entries in the indices does not contradict with the sorting order while the contents of the storage regions designated by the address values are updated.

8. The data management method according to claim 2 further comprising retrieving indices with specified keys.

9. The data management method according to claim 8 further comprising determining storage regions containing designated contents and retrieving indices corresponding to the determined storage regions.

10. The data management method according to claim 8 further comprising retrieving further indices corresponding to storage regions designated by other address values contained in records that contain address values corresponding to entries obtained by the preceding retrieval on other indices.

11. A computer readable storage medium containing executable data management program instructions for carrying out the method of any one of claims 1 to 10.

12. A carrier medium carrying computer readable instructions for controlling a computer to carry out the method of any one claims 1 to 10.

13. A data management system comprising:
means for assigning different indices to each of plurality of storage regions that are discriminated from each other by their addresses;
means for forming entries corresponding to records containing address values referring to the storage regions so that the entries and the address values contained have one-to-one correspondence; and
means for registering the entries in the indices assigned to the storage regions that are designated by the address values corresponding to the entries.
